# EUROPÄISCHE PATENTSCHRIFT

(11) **EP 0 584 581 B1**
(45) Veröffentlichungstag und Bekanntmachung des Hinweises auf die Patenterteilung: **28.10.1998**
(21) Anmeldenummer: 93112279.0
(22) Anmeldetag: 30.07.1993
(51) Int. Cl.: H04B 5/00

(54) **Breitband-Tunnelfunksystem**
Broadband tunnel radio system
Système radio à large bande pour tunnel

(30) Priorität: 28.08.1992 DE 4228623
(43) Veröffentlichungstag der Anmeldung: 02.03.1994
(73) Patentinhaber: ROBERT BOSCH GMBH, 70442 Stuttgart (DE)
(72) Erfinder: Erdmann, Dieter, D-12277 Berlin (DE); Yenerim, Savas, 14055 Berlin (DE); Schoenbacher, Sepp, D-13593 Berlin (DE)

(56) Entgegenhaltungen:
- EP-A- 0 442 259
- PATENT ABSTRACTS OF JAPAN vol. 15, no. 90 (E-1040)5. März 1991 & JP-A-02 303 240 (TOSHIBA) 17. Dezember 1990
- SIGNAL + DRAHT Bd. 82, Nr. 6 , Juni 1990 , DARMSTADT DE Seiten 117 - 123 XP000248955 J.LEINWEBER 'NBS-TUNNELFINK FÜR KUNDENDIENSTE'

## Beschreibung

Die Erfindung geht von einem Tunnelfunksystem nach dem Oberbegriff des Anspruchs 1 aus.

Es ist ein Tunnelfunksystem bekannt (DE-PS 27 28 765), das in Breitbandtechnik arbeitet. Sofern Informationen in verschiedenen Frequenzbändern, zum Beispiel der Funktelefonnetze C und D, des UKW-Rundfunks, des Betriebsfunks und anderer Funkdienste, zu übertragen sind, müssen die Übertragungsmittel entsprechend breitbandig ausgelegt sein. Der Erfindung liegt die Aufgabe zugrunde, die gesamte Bandbreite mit möglichst geringem Aufwand zu verringern.

Diese Aufgabe wird durch die im Anspruch 1 angegebenen Merkmale gelöst. Damit ist der Vorteil verbunden, daß die Übertragungsmittel für eine erheblich geringere Bandbreite ausgelegt sein müssen. Vorteilhafte Weiterbildungen der Erfindung ergeben sich aus den Unteransprüchen.

Ein Ausführungsbeispiel der Erfindung ist in der Zeichnung an Hand mehrerer Figuren dargestellt und wird im folgenden näher erläutert. Die Zeichnung zeigt in
- Fig. 1: ein vereinfachtes Blockschaltbild eines erfindungsgemäßen Tunnelfunksystems,
- Fig. 2: ein Blockschaltbild einer Kopfstation eines Tunnelfunksystems nach Fig. 1 und
- Fig. 3: ein Blockschaltbild für eine Tunnelfunkstelle eines Tunnelfunksystems nach Fig. 1.

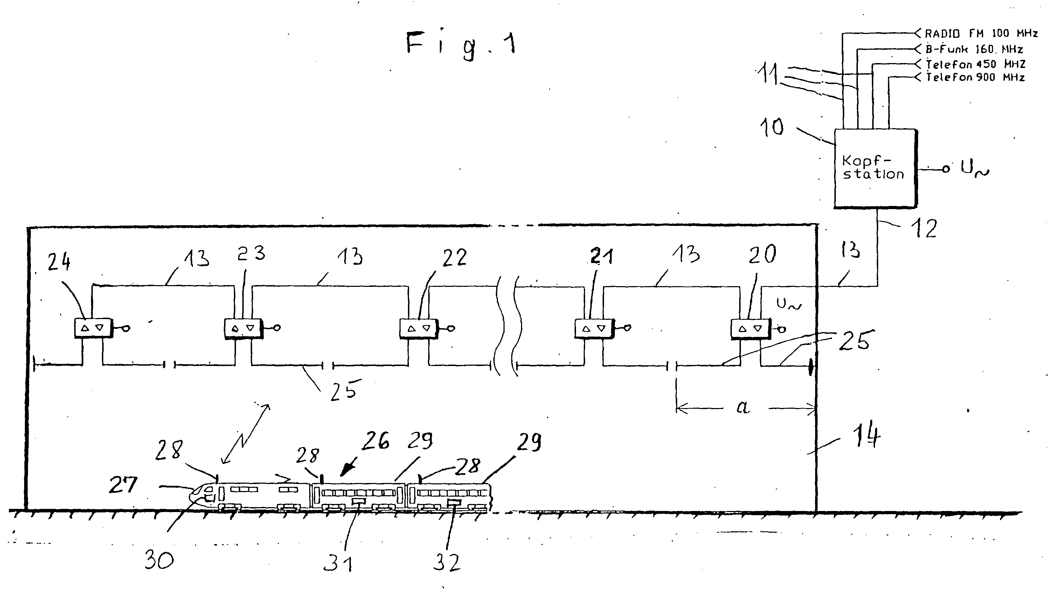

In Fig. 1 bezeichnet 10 eine Kopfstation mit Anschlüssen 11 für verschiedene Funkdienste. Ein weiterer Anschluß 12 ist über Kabelabschnitte 13 oder Lichtwellenleiterabschnitte mit in einem Tunnel 14 in bestimmten Abständen von zum Beispiel 1,5 km angeordneten Tunnelfunkstellen 20 bis 24, das sind Verstärkerstellen, verbunden. Jede Tunnelfunkstelle weist ein Hochfrequenzübertragungsmedium 25 auf, das ist zum Beispiel ein Hochfrequenzleckkabel, dessen Länge einem Tunnelabschnitt a entspricht, und über das eine uni- oder bidirektionale Funkverbindung zu Mobilstationen 30, 31 und 32 hergestellt werden kann. Die Mobilstation 30 gehört zum Beispiel zu einer Lokomotive 27 und die Mobilstationen 31 und 32 zu mit der Lokomotive 27 gekuppelten Wagen 29 eines Eisenbahnzuges 26. Die Lokomotove 27 und die Wagen 29 weisen je eine Sende-Empfangsantenne 28 für ihre Mobilstationen auf. Mit einem Tunnelfunksystem nach Fig. 1 können Informationen verschiedener Funkdienste, wie zum Beispiel der Funktelefonnetze C und D der DBP Telekom, des FM-Rundfunks, des Betriebsfunks, des Eurosignalsystems und gegebenenfalls weiterer Funkdienste, auf verschiedenen Frequenzbändern übertragen werden.

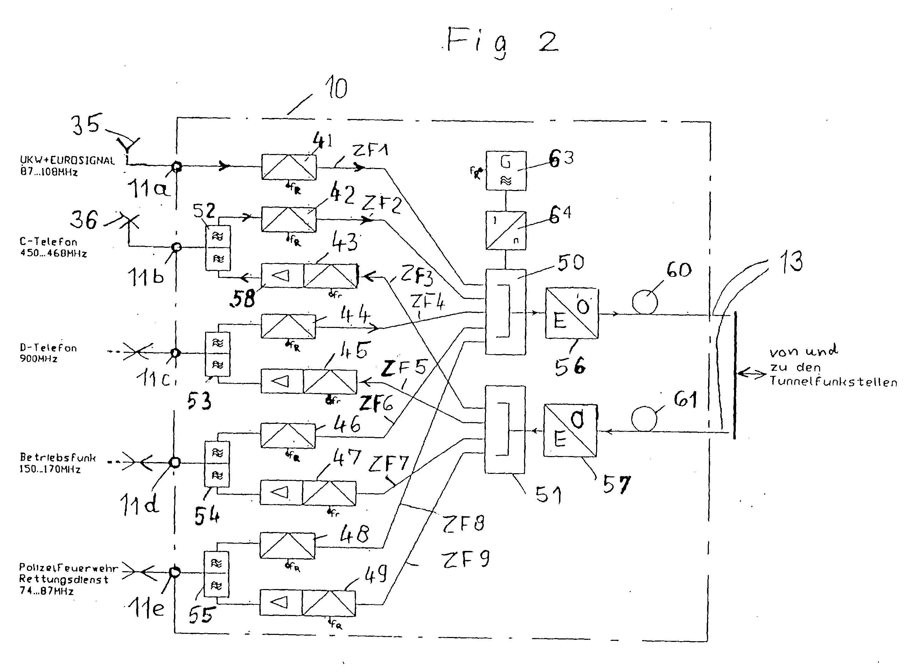

Dieses im Prinzip bekannte Tunnelfunksystem nach Fig. 1 wird erfindungsgemäß durch Anwendung einer breitbandigen Frequenzumsetzung in der Kopfstation 10 und in den Tunnelfunkstellen 20 bis 24 weitergebildet. Eine dafür bestimmte Kopfstation 10 hat den in Fig. 2 gezeigten Aufbau. Ein erster Anschluß 11 a, an den zum Beispiel eine Empfangsantenne 35 für den FM-Rundfunk und das Eurosignal angeschlossen ist, steht über einen Bandselektor 41 einer ersten Gruppe von Bandselektoren 41, 42, 44, 46 und 48 mit einem Eingang eines ersten Kopplers 50 in Verbindung; eine Sende-Empfangsantenne 36 für die Signale des C-Netzes ist über einen zweiten Anschluß 11 b der Kopfstation 10 mit einem Duplexer 52 verbunden, der erstens über den Bandselektor 42 mit einem zweiten Eingang des ersten Kopplers 50 in Verbindung steht und zweitens mit dem Ausgang eines ersten Hochfrequenzverstärkers 58 verbunden ist, dem ein Bandselektor 43 vorgeschaltet ist, der zu einer zweiten Gruppe von Bandselektoren 43, 45, 47, 49 gehört, die mit Ausgängen eines zweiten Kopplers 51 verbunden ist. Die Anschlüsse 11 c bis 11 e der Kopfstation 10 sind über Duplexer 53 bis 55 und über Bandselektoren 44 bis 49 mit entsprechenden Eingängen des ersten Kopplers 50 und Ausgängen des zweiten Kopplers 51 verbunden.

In dem Ausführungsbeispiel nach Fig. 2 wird davon ausgegangen, daß die Kabelabschnitte 13 nach Fig. 1 durch zwei Lichtwellenleiter 60, 61 gebildet sind. Zwischen dem Ausgang des ersten Kopplers 50 und dem ersten Lichtwellenleiter 60 ist ein elektrisch-optischer Wandler 56 und zwischen dem zweiten Lichtwellenleiter 61 und dem Eingang des zweiten Kopplers 51 ein optisch-elektrischer Wandler 57 geschaltet. Dem ersten Koppler 50 ist ein Referenzfrequenzgenerator 63 zugeordnet, dem ein Frequenzvervielfacher 64 nachgeschaltet ist, der die Referenzfrequenz f_{R} des Referenzfrequenzgenerators mit einem Faktor n multipliziert.

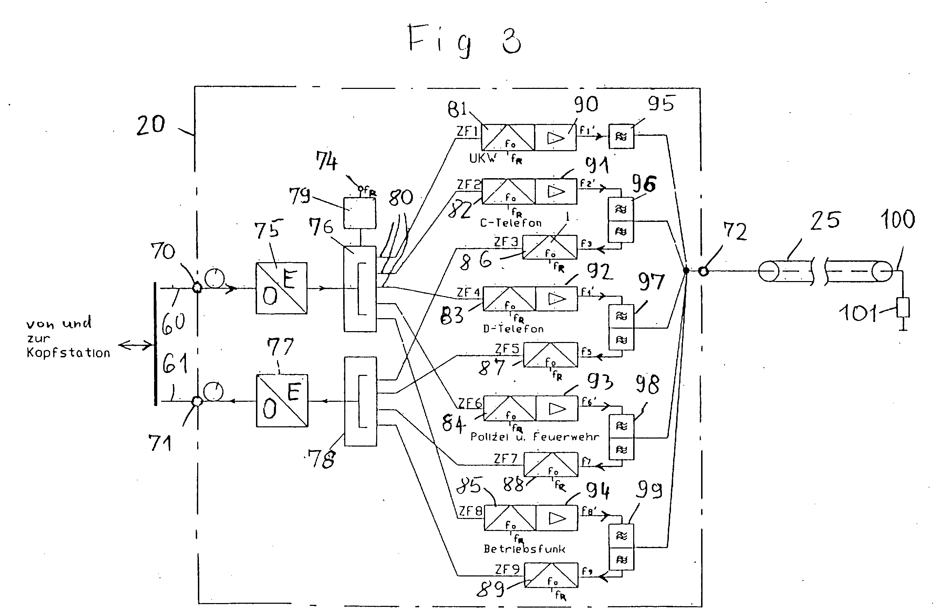

Die Tunnelfunkstelle 20 nach Fig. 3 weist drei Anschlüsse 70, 71, 72 auf, von denen der erste und zweite Anschluß 70, 71 mit den Lichtwellenleitern 60, 61 der Kopfstation 10 (Fig. 2) verbunden sind. In der Tunnelfunkstelle 20 ist der erste Anschluß 70 mit dem optischen Eingang eines optisch-elektrischen Wandlers 75 verbunden, dessen elektrischer Ausgang mit einem Eingang eines Kopplers 76 verbunden ist, an den sich eine Gruppe von Bandselektoren 81 bis 85 anschließt und der mit einem Frequenzteiler 79 verbunden ist. An einem Anschluß 74 des Frequenzteilers liegt die Referenzfrequenz f_{R}. Der zweite Anschluß 71 steht mit dem optischen Ausgang eines elektrisch-optischen Wandlers 77 in Verbindung, dessen elektrischer Eingang mit dem Ausgang eines weiteren Kopplers 78 verbunden ist. Eingänge des weiteren Kopplers 78 stehen mit einer weiteren Gruppe von Bandselektoren 86 bis 89 in Verbindung. Den Bandselektoren 81 bis 85 ist je ein Verstärker 90 bis 94 nachgeschaltet. Der Ausgang des Verstärkers 90 steht mit einem Bandfilter 95 und die Ausgänge der Verstärker 91 bis 94 mit je einem Duplexer 96 bis 99 in Verbindung, an die die weitere Gruppe von Bandselektoren 86 bis 89 angeschlossen ist.

Das Bandfilter 95 und die Duplexer 96 bis 99 stehen unmittelbar mit dem Anschluß 72 der Tunnelfunkstelle 20 in Verbindung, an die sich das Hochfrequenzübertragungsmedium 25 anschließt, das ist zum Beispiel ein Leckkabel, dessen Innenleiterende 100 über einen Abschlußwiderstand 101 zum wellenwiderstandsgerechten Abschließen des Leckkabels mit Masse verbunden ist. An die Stelle des Leckkabels 25 kann auch eine Sende-Empfangsantenne treten.

Die Wirkungsweise der Kopfstation 10 (Fig. 2) in Verbindung mit einer Tunnelfunkstelle, zum Beispiel 20 nach Fig. 1 und 3, ist folgende. Dabei wird als Beispiel nur der Signalweg von und zu der Sende-Empfangsantenne 36 erläutert.

Die mit der Sende-Empfangsantenne 36 der Kopfstation 10 (Fig. 2) empfangenen Hochfrequenzsignale des C-Telefonnetzes (460 ... 466 MHz) werden über den Anschluß 11 b und den Duplexer 52 dem Bandselektor 42 zugeführt, der die hochfrequenten Empfangssignale selektiert, in ein Zwischenfrequenzband ZF2 umsetzt und gegebenenfalls verstärkt. Das derart umgesetzte Signal gelangt über den ersten Koppler 50 an den elektrischen Eingang des elektrisch-optischen Wandlers 56, der die umgesetzten und gegebenenfalls verstärkten elektrischen Signale in optische Signale umwandelt und in den Lichtwellenleiter 60 einspeist. Die mit dem Lichtwellenleiter 60 übertragenen optischen Signale gelangen an den Anschluß 70 aller Tunnelfunkstellen 20 bis 24 (Fig. 1). Die Tunnelfunkstelle 20 (FIg. 3) setzt die Signale mit dem optisch-elektrischen Wandler 75 in elektrische Signale um, die über den Koppler 76 dem Eingang des Bandselektors 82 zugeführt werden. In dem Bandselektor findet eine Selektion und Rückumsetzung des Zwischenfrequenzbandes ZF2 in das ursprüngliche Frequenzband statt. Das derart umgesetzte Signal gelangt über den Duplexer 96 an den Anschluß 72 der Tunnelfunkstelle 20 und von dort auf das Leckkabel 25. Das von dem Leckkabel 25 abgestrahlte Signal wird zu der Sende-Empfangsantenne 28 der Lokomotive 27 übertragen. In der Lokomotive 27 bzw. in den Wagen 29 befinden sich Funktelefone 30, 31, 32, die die empfangenen Signale in der dem Fachmann bekannten Weise auswerten und eine Gesprächsverbindung aufbauen.

In umgekehrter Richtung, das heißt von den Funktelefonen 30, 31, 32 zu der Kopfstation 10, nehmen die Signale folgenden Weg. Die von einem Funktelefon, zum Beispiel 30, abgegebenen Hochfrequenzsignale werden über die Sende-Empfangsantenne 28 (Fig. 1) abgestrahlt und vom Leckkabel 25 empfangen.

Der Duplexer 96 (Fig. 3) leitet die Hochfrequenzsignale über den Bandselektor 86, der das betreffende Frequenzband umsetzt und gegebenenfalls verstärkt, an den Koppler 78. Mit dem elektrisch-optischen Wandler 77 werden die elektrischen Signale in optische Signale umgewandelt und über den Lichtwellenleiter 61 dem optisch-elektrischen Wandler 57 der Kopfstation 10 (Fig. 2) zugeführt. Die in elektrische Signale umgewandelten optischen Signale gelangen über den zweiten Koppler 51 an den Bandselektor 43, der das Zwischenfrequenzband ZF3 rückumsetzt und die Signale mit dem Hochfrequenzverstärker 58 verstärkt. Die verstärkten Signale werden über den Duplexer 52 und den Anschluß 11 b der Sende-Empfangsantenne 36 zugeführt.

Die Zwischenfrequenzen ZF1 bis ZF9 sind derart gewählt, daß sie sich mit geringstmöglichen Abständen aneinanderreihen, so daß das gesamte zu übertragende Frequenzband eine möglichst geringe Bandbreite einnimmt.

Um keinen Frequenzversatz zwischen dem empfangenen und dem ausgesendeten Signal zu erhalten, werden alle Bandselektoren 41 bis 49 der Kopfstation 10 und 81 bis 89 der Tunnelfunkstelle 20 durch die Referenzfrequenz f_{R} des Referenzfrequenzgenerators 63 der Kopfstation synchronisiert. Die Referenzfreqenz f_{R} wird in die ZF-Ebene durch den Frequenzumsetzer 64 transponiert. In den Tunnelfunkstellen wird die Referenzfrequenz durch den Frequenzumsetzer 79 aus der Zwischenfrequenz zurückgewonnen. Ebenfalls besteht die Möglichkeit, die Referenzfrequenz ohne Frequenzumsetzung direkt zu übertragen. Durch die den Bandselektoren 81 bis 89 der Tunnelfunkstellen 20 bis 24 zugeführte Referenzfrequenz f_{R} wird sichergestellt, daß die Ausgangsfrequenz keine Abweichung gegenüber der Eingangsfrequenz aufweist.

## Patentansprüche

1. Tunnelfunksystem zum Übertragen von Informationen in verschiedenen Frequenzbändern (C-Netz-Telefon, D-Netz-Telefon, UKW-Rundfunk) mit einer Kopfstation (10), einem in einem hochfrequenzmäßig abgeschirmten Raum (14) enthaltenen und mit der Kopfstation verbundenen Hochfrequenzübertragungsmedium (25), das mindestens eine Tunnelfunkstelle (20-24) enthält, und mit mindestens einer in dem abgeschirmten Raum (14) operierenden Mobilstation (30), die die von dem übertragungsmedium (25) abgestrahlten Hochfrequenzsignale empfängt und/oder von der Mobilstation (30) ausgestrahlte Hochfrequenzsignale auf das Hochfrequenzübertragungsmedium (25) überträgt, **dadurch gekennzeichnet**, daß die Kopfstation (10) je Frequenzband und je Übertragungsrichtung einen ersten Bandselektor (41-49) hoher Trennschärfe aufweist, der das jeweilige Frequenzband in ein Zwischenfrequenzband (ZF1-ZF9) umsetzt, daß die Tunnelfunkstellen (20-24) je Zwischenfrequenzband einen zweiten Bandselektor (81-89) zum Rückumsetzen des jeweiligen Zwischenfrequenzbandes in das entsprechende Originalfrequenzband aufweist und daß die Zwischenfrequenzbänder (ZF1-ZF9) möglichst eng aneinandergereiht sind.

2. Tunnelfunksystem nach Anspruch 1, dadurch gekennzeichnet, daß für die übertragung von Signalen zwischen der Kopfstation (10) und den Tunnelfunkstellen (20-24) Lichtwellenleiter (60, 61) vorgesehen sind.

3. Tunnelfunksystem nach Anspruch 1 oder 2, dadurch gekennzeichnet, daß zur Synchronisierung der zu übertragenden Signale in der Kopfstation (10) eine Referenzfrequenzquelle (63) vorgesehen ist, deren Referenzfrequenz (f_{R}) in der Zwischenfrequenzebene zu den Tunnelfunkstellen (20-24) übertragen wird, und daß die Referenzfrequenz (f_{R}) die Bandselektoren (81-89) synchronisiert.

4. Tunnelfunksystem nach Anspruch 1 oder 2, dadurch gekennzeichnet, daß in der Kopfstation (10) eine erste Gruppe von Bandselektoren (41-49) vorgesehen ist, die die verschiedenen Frequenzbänder in unterschiedliche Zwischenfrequenzbänder (ZF1-ZF9) umsetzen und an die Tunnelfunkstellen (20-24) übertragen, daß in den Tunnelfunkstellen die Zwischenfrequenzbänder einer zweiten Gruppe von Bandselektoren (81-89) zugeführt werden, die die Zwischenfrequenzbänder zurück in die Originalfrequenzbänder umsetzen, und daß diese Frequenzbänder über Koppelnetzwerke (95 - 99) zusammengeführt und über das Hochfrequenzübertragungsmedium (25) in dem abgeschirmten Raum (14) abgestrahlt werden.

5. Tunnelfunksystem nach Anspruch 4, dadurch gekennzeichnet, daß jedem der Bandselektoren (81 bis 85) der Tunnelfunkstellen (20 bis 24) ein Hochfrequenzleistungsverstärker (90 bis 94) nachgeschaltet ist.

## Claims

1. Tunnel radio system for transmitting information in various frequency bands (C-network telephone, D-network telephone, VHF broadcast radio) having a head station (10), a radio-frequency transmission medium (25) which is contained in an area (14) (which is screened in terms of radio frequency), is connected to the head station and contains at least one tunnel radio point (20-24), and having at least one mobile station (30) which operates in the screened area (14), receives the radio-frequency signals emitted by the transmission medium (25) and/or transmits to the radio-frequency transmission medium (25) radio-frequency signals emitted by the mobile station (30), characterized in that the head station (10) has a first band selector (41-49) with a high selectivity for each frequency band and for each transmission direction, which band selector (41-49) converts the respective frequency band into an intermediate frequency band (ZF1-ZF9), in that the tunnel radio points (20-24) have a second band selector (81-89) for each intermediate frequency band for back-conversion of the respective intermediate-frequency band to the corresponding original frequency band, and in that the intermediate-frequency bands (ZF1-ZF9) are arranged as close to one another as possible.

2. Tunnel radio system according to Claim 1, characterized in that optical fibre conductors (60, 61) are provided for the transmission of signals between the head station (10) and the tunnel radio points (20-24).

3. Tunnel radio system according to Claim 1 or 2, characterized in that a reference frequency source (63) is provided in the head station (10) for synchronization of the signals to be transmitted and its reference frequency (f_{R}) is transmitted at the intermediate-frequency level to the tunnel radio points (20-24), and in that the reference frequency (f_{R}) synchronizes the band selectors (81-89).

4. Tunnel radio system according to Claim 1 or 2, characterized in that a first group of band selectors (41-49) is provided in the head station (10), which band selectors (41-49) convert the various frequency bands into different intermediate-frequency bands (ZF1-ZF9) and transmit them to the tunnel radio points (20-24), in that, in the tunnel radio points, the intermediate-frequency bands are fed to a second group of band selectors (81-89) which convert the intermediate-frequency bands back to the original frequency bands, and in that these frequency bands are combined via coupling networks (95-99) and are emitted via the radio-frequency transmission medium (25) in the screened area (14).

5. Tunnel radio system according to Claim 4, characterized in that a radio-frequency power amplifier (90 - 94) is connected downstream of each of the band selectors (81 to 85) of the tunnel radio points (20 to 24).

## Revendications

1. Système radio pour tunnel, pour transmettre des informations dans différentes bandes de fréquence (réseau téléphonique C, réseau téléphonique D, radio à modulation de fréquence MF) avec une station de tête (10), un moyen de transmission à haute fréquence (25) relié à la station de tête et situé dans une enceinte (14) isolée en haute fréquence, le moyen de transmission comprenant au moins un point radio de tunnel (20-24) et au moins une station mobile (20) opérant dans l'enceinte isolée (14), ce poste mobile recevant les signaux haute fréquence rayonnés par le moyen de transmission (25) et/ou les signaux haute fréquence émis par la station mobile (30) vers le moyen de transmission à haute fréquence (25),
caractérisé en ce que
- pour chaque bande de fréquence et chaque sens de transmission, la station de tête (10) comprend un premier secteur de bande (41-49) à pouvoir séparateur accentué qui convertit la bande de fréquence respective en une bande de fréquence intermédiaire (ZF1-ZF9),
- les points radio de tunnel (20-24), pour chaque bande de fréquence intermédiaire, comprennent un second sélecteur de bande (81-89) pour remettre à zéro la bande de fréquence intermédiaire respective dans la bande de fréquence d'origine correspondante et
- les bandes de fréquences intermédiaires (ZF1-ZF9) sont juxtaposées aussi étroitement que possible.

2. Système radio pour tunnel selon la revendication 1,
caractérisé par
des guides d'ondes optiques (60, 61) pour transmettre les signaux entre la station de tête (10) et les points radio de tunnel (20-24).

3. Système radio pour tunnel selon les revendications 1 ou 2,
caractérisé en ce que
pour synchroniser les signaux à transmettre, la station de tête (10) comporte une source de fréquence de référence (63) dont la fréquence de référence (f_{R}) est transmise dans le plan des fréquences intermédiaires vers les points radio de tunnel (20-24) et la fréquence de référence (f_{R}) synchronise les sélecteurs de bande (81-89).

4. Système radio pour tunnel selon les revendications 1 ou 2,
caractérisé en ce que
- la station de tête (10) comprend un premier groupe de sélecteurs de bande (41-49) qui convertissent les différentes bandes de fréquence en des bandes de fréquences intermédiaires différentes (ZF1-ZF9) et les transmettent au point radio de tunnel (20-24),
- dans les points radio de tunnel, les bandes de fréquence intermédiaire sont appliquées à un second groupe de sélecteurs de bande (81-89) qui convertissent les bandes de fréquence intermédiaire en retour vers les bandes de fréquence d'origine et
- ces bandes de fréquence sont réunies par des réseaux de couplage (95-99) et sont émises dans l'enceinte isolée (14) par le moyen de transmission à haute fréquence (25).

5. Système radio pour tunnel selon la revendication 4,
caractérisé en ce qu'
un amplificateur de puissance à haute fréquence (90-94) est prévu en aval de chacun des sélecteurs de bande (81-85) des points radio de tunnel (20-24).
